# EUROPEAN PATENT SPECIFICATION

(11) **EP 1 769 831 B1**
(45) Date of publication and mention of the grant of the patent: **08.04.2009**
(21) Application number: 05758222.3
(22) Date of filing: 05.07.2005
(51) Int. Cl.: A63F 13/10, A63F 13/00

(54) **GAME MACHINE, GAME MACHINE CONTROL METHOD, AND INFORMATION STORAGE MEDIUM**
SPIELAUTOMAT, SPIELAUTOMATSTEUERUNGVERFAHREN UND INFORMATIONSPEICHERUNGSMEDIUM
MACHINE DE JEU, MÉTHODE DE CONTRÔLE D"UNE MACHINE DE JEU ET SYSTÈME DE STOCKAGE DE L"INFORMATION

(30) Priority: 20.07.2004 JP 2004212253
(43) Date of publication of application: 04.04.2007
(73) Proprietor: Konami Digital Entertainment Co., Ltd., Tokyo 107-8324 (JP)
(72) Inventor: TERADA, Toshiyuki c/o Konami Dig. Enter. Co., Ltd., Tokyo 1066114 (JP)
(74) Representative: Müller-Boré & Partner Patentanwälte
(86) International application number: PCT/JP2005/012373
(87) International publication number: WO 2006/008956

(56) References cited:
- EP-A- 1 293 239
- GB-A- 1 283 459
- JP-A- 8 047 582
- JP-A- 10 201 957
- JP-A- 2003 071 136
- US-A1- 2002 198 047

## Description

### TECHNICAL FIELD

The present invention relates to a game machine, a game machine control method, and an information storage medium.

### BACKGROUND ART

There is known a competitive game for making a given event happen by moving a mobile object toward a target that is marked out with a target frame. A known example of the game is a soccer simulation game of competition for points scored by putting a ball into a goal.

EP-1 293 239 A discloses a ball game program that has routines of computing an attack form of a first character on the basis of an instruction by a player, a routine of computing and displaying an attack probability according to the instruction of the attack position by the player, a routine of automatically proceeding a game after the attack form is computed and set, and routines of controlling to display an attack action and a defense action of a ball by the first and the second characters with a series of pictures in the routines. After the player instructs the attack form, the attack action and the defense action of the ball are displayed with a series of pictures. The player can concentrate on the instruction action of the attack form, and can enjoy a brain play.

### DISCLOSURE OF THE INVENTION

Problem to be Solved by the Invention There is a strong demand for a game such as the one described above that raises the level of interest in the game.

The present invention has been made in view of the above-mentioned problem, and an object of the present invention is therefore to provide a game machine, a game machine control method, and an information storage medium which can raise the level of interest in a game where participants compete to make a given event happen by moving a mobile object toward a target that is marked out with a target frame.

### Means for Solving the Problem

The problem is solved by a game machine having the features disclosed in claim 1, a method for controlling a game machine having the features disclosed in claim 6, an information storage medium having the features disclosed in claim 7, and a computer program product having the features disclosed in claim 8. Preferred embodiments of the invention are defined in the respective dependent claims.

In order to solve the above-mentioned problem, the present invention provides a game machine for providing a competitive game for making a given event happen by moving a mobile object toward a target that is marked out with a target frame, including: probability information storing means for storing probability information corresponding to a combination of an angle condition and at least one of a plurality of options related to the target frame, the angle condition being about an angle between a reference direction of the target frame and a direction running from a reference position of the target frame to a position of the mobile object; position obtaining means for obtaining the position of the mobile object when an operation is performed to move the mobile object toward the target; selection means for selecting at least one of the plurality of options when an operation is performed to move the mobile object toward the target; probability information obtaining means for obtaining probability information that is stored in the probability information storing means corresponding to the combination of the angle condition that is satisfied by the mobile object position obtained by the position obtaining means and the option that is selected by the selection means; event occurrence control means for determining whether to let the given event happen based on the probability information that is obtained by the probability information obtaining means; and display means for displaying a game screen that shows an occurrence of the given event based on a decision made by the event occurrence control means.

Further, a game machine control method according to the present invention is a method of controlling a game machine that provides a a competitive game for making a given event happen by moving a mobile object toward a target that is marked out with a target frame, including: probability information storing means for storing probability information in correspondence with the combination of an angle condition and at least one of a plurality of options related to the target frame, the angle condition being about an angle between a reference direction of the target frame and a direction running from a reference position of the target frame to the position of the movable body; a position obtaining step of obtaining the position of the mobile object when an operation is performed to move the mobile object toward the target; a selection step of selecting at least one of the plurality of options when an operation is performed to move the mobile object toward the target; a probability information obtaining step of reading stored information out of a probability information storing means which stores probability information in correspondence with the combination of an angle condition, which is about an angle between a reference direction of the target frame and a direction running from a reference position of the target frame to the position of the mobile object, and at least one of a plurality of options related to the target frame, and obtaining probability information that is stored in the probability information storing means in correspondence with the combination of the angle condition that is satisfied by the mobile object position obtained in the position obtaining step and the option that is selected in the selection step; an event occurrence control step of determining whether to let the given event happen based on the probability information that is obtained in the probability information obtaining step; and a step of causing display means to display a game screen that shows the occurrence of the given event based on a decision made in the event occurrence control step.

Further, a program according to the present invention is a program for causing a computer such as a household game machine, a portable game machine, a commercial game machine, a cellular phone, a personal digital assistant (PDA), or a personal computer to function as a game machine that provides a a competitive game for making a given event happen by moving a mobile object toward a target that is marked out with a target frame, and causes the computer to function as: probability information storing means for storing probability information in correspondence with a combination of an angle condition and at least one of a plurality of options related to the target frame, the angle condition being about an angle between a reference direction of the target frame and a direction running from a reference position of the target frame to a position of the mobile object; position obtaining means for obtaining the position of the mobile object when an operation is performed to move the mobile object toward the target; a selection means for selecting at least one of the plurality of options when an operation is performed to move the mobile object toward the target; probability information obtaining means for obtaining probability information that is stored in the probability information storing means in correspondence with the combination of the angle condition that is satisfied by the mobile object position obtained by the position obtaining means and the option that is selected by the selection means; event occurrence control means for determining whether to let the given event happen based on the probability information that is obtained by the probability information obtaining means; and display means for displaying a game screen that shows the occurrence of the given event based on a decision made by the event occurrence control means. An information storage medium according to the present invention is an information storage medium in which the above-mentioned program is recorded.

Further, a program distributing device according to the present invention is a program distributing device that has an information storage medium where the above-mentioned program is recorded, reads the program out of the information storage medium, and distributes the program.

Further, a program distribution method according to the present invention is a program distribution method including : recording the above-mentioned program in the information storage medium; reading the program out of the information storage medium; and distributing the read program.

The present invention relates to a game machine that provides a a competitive game for making a given event happen by moving a mobile object toward a target that is marked out with a target frame. In the present invention, probability information is stored in correspondence with the combination of an angle condition, which is about an angle between a reference direction of the target frame and a direction running from a reference position of the target frame to a position of the mobile object, and at least one of a plurality of options related to the target frame. When an operation is performed to move the mobile object toward the target, the position of the mobile object is obtained. Also, at least one of the options is chosen. Then such probability information is obtained that is stored in correspondence with the combination of an angle condition that is satisfied by the mobile object position and the chosen option. Based on the probability information, whether or not to let the given event happen is determined. In the case where it is determined that the given event occurs, a game screen is displayed which shows the occurrence of the given event. According to the present invention, in a game where participants compete to make a given event happen by moving a mobile object toward a target that is marked out with a target frame, whether the given event happens or not is determined based on an angle between a reference direction of the target frame and a direction running from a reference position of the target frame to the position of the mobile object, and also a chosen option. The present invention thus makes it possible to raise the level of interest in a competitive game for making a given event happen by moving a mobile object toward a target that is marked out with a target frame.

Further, an aspect of the present invention includes target frame image storing means for storing a target frame image in correspondence with the angle condition, the target frame image representing the target frame, wherein the selection means displays the target frame image that is stored in the target frame image storing means in correspondence with the angle condition that is satisfied by the mobile object position obtained by the position obtaining means. In this way, in selecting from the options, a target frame image can be displayed that is associated with an angle between the reference direction of the target frame and a direction running from a reference position of the target frame to the position of the mobile object. As a result, a game player is guided through the process of selecting from the options in a desirable manner.

In this aspect, the selection means may display images respectively representing the plurality of options in association with a part of the target which is marked out with the target frame represented by the target frame image. In this way, a game player is guided through the process of selecting from the options in an even more desirable manner.

Further, according an aspect of the present invention, the game is a ball sport simulation game where a ball and a goal serve as the mobile object and the target frame, respectively, the given event is a scoring event, and opponents compete for points scored by putting the ball in the goal, and the operation of moving the mobile object toward the target is an operation of causing an operation subject to shoot the ball. In this way, the level of interest in the ball sport simulation game can be raised.

In this aspect, the event occurrence control means may include: first decision means for determining, when an operation is performed to cause the operation subject to shoot, whether or not the resultant shot goes into the goal based on the probability information obtained by the probability information obtaining means; and second decision means for determining, when an operation is performed to cause the operation subject to shoot, whether or not the resultant shot is blocked by a goalkeeper based on the probability information obtained by the probability information obtaining means, and the event occurrence control means may let the scoring event happen based on decisions made by the first and second decision means. In this way, the level of interest in the ball game simulation game can be raised even further.

### BRIEF DESCRIPTION OF THE DRAWINGS

FIG. 1 is a diagram showing a configuration of a game machine according to an embodiment.
FIG. 2 is a diagram showing an example of a controller.
FIG. 3 is a diagram showing an example of a game screen.
FIG. 4 is a diagram showing an example of a shoot target selecting screen.
FIG. 5 is a diagram showing an example of a shoot target selecting screen.
FIG. 6 is a diagram showing an example of a shoot target selecting screen.
FIG. 7 is a diagram showing an example of a shoot target selecting screen.
FIG. 8 is a diagram showing an example of a shoot target selecting screen.
FIG. 9 is a diagram showing field sections.
FIG. 10 is a diagram showing functional blocks of the game machine according to the embodiment of the present invention.
FIG. 11 is a diagram showing an example of a game situation information table.
FIG. 12 is a diagram showing an example of a soccer player information table.
FIG. 13 is a diagram showing an example of a field section information table.
FIG. 14 is a flow chart illustrating the shoot executing processing.
FIG. 15 is a diagram showing an overall configuration of a program distribution system according to another embodiment of the present invention.

### BEST MODE FOR CARRYING OUT THE INVENTION

The following is a detailed description, based on the drawings, of an example of a preferred embodiment of the present invention.

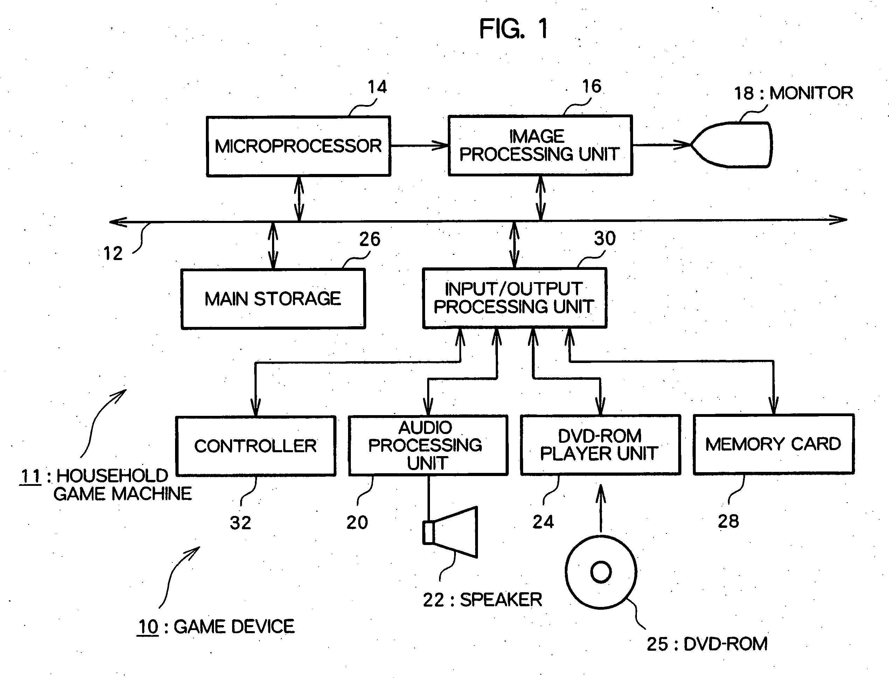

FIG. 1 is a diagram showing a configuration for a game machine of an embodiment of the present invention. A game machine 10 of FIG. 1 is constructed from a household game machine 11 having a DVD-ROM 25 and a memory card 28, both serving as information storage media, a monitor 18, and a speaker 22, all mounted or connected to the household game machine 11. For example, the monitor 18 may be a household television set receiver; the speaker 22 may be a built-in speaker thereof.

Further, the DVD-ROM 25 is used to supply the program to the household game machine 11 but any other information storage media such as CD-ROMs or ROM cards etc. may also be used. Moreover, the program may also be supplied to the household game machine 11 from a remote location via a data communication network such as the Internet, etc.

The household game machine 11 is a well-known computer game system including a microprocessor 14, an image processing unit 16, an audio processing unit 20, a main memory 26, a DVD-ROM player unit 24, an input/output processing unit 30, and a controller 32. The microprocessor 14, the image processing unit 16, the main memory 26, and the input/output processing unit 30 are connected so as to be capable of mutual data communication using a bus 12. The audio processing unit 20, the DVD-ROM player unit 24, the memory card 28, and the controller 32 are connected to the input/output processing unit 30. Each configuration element of the household game machine 11 other than the controller 32 is housed in a case.

The bus 12 is for exchanging addresses and data with each part of the household game machine 11. The microprocessor 14 controls each part of the household game machine 11 based on an operating system housed in a ROM (not shown), a program read from the DVD-ROM 25, and data read from the memory card 28, and provides the game to the player. The image processing unit 16 is constructed from a VRAM. The image processing unit 16 receives image data sent from the microprocessor 14, renders a game screen image into the VRAM based on the received image data, converts the content of the received image data into a video signal, and outputs the video signal to the monitor 18 at a predetermined time. The main memory 26, for example, is constructed from RAM, which is written with programs read out from the DVD-ROM 25 and data read out from the memory card 28 as necessary. The main memory 26 can also be used for work space in operations of the microprocessor 14.

The input/output processing unit 30 is an interface enabling the microprocessor 14 to access the audio processing unit 20, the DVD-ROM player unit 24, the memory card 28, and the controller 32. The audio processing unit 20 includes a sound buffer, and reproduces and outputs, via the speaker 22, various sound data, such as game music, game sound effects, messages, and so forth, which is read from the DVD-ROM 25 and stored in the sound buffer. The DVD-ROM player unit 24 reads programs recorded on the DVD-ROM 25 in accordance with instructions from the microprocessor 14. The memory card 28 includes non-volatile memory (for example, EEPROM) and is detachable from the household game machine 11. Saved data etc. for various games is stored in the memory card 28. The controller 32 is a general-purpose operation input means for enabling a player to input various game operations. The input/output processing unit 30 scans the state of parts of the controller 32 at regular intervals (e.g., at 1/60-second intervals), and sends operation signals, which indicate results of the scan, to the microprocessor 14 via the bus 12. The microprocessor 14 judges from the operation signals what game operation is performed by the game player.

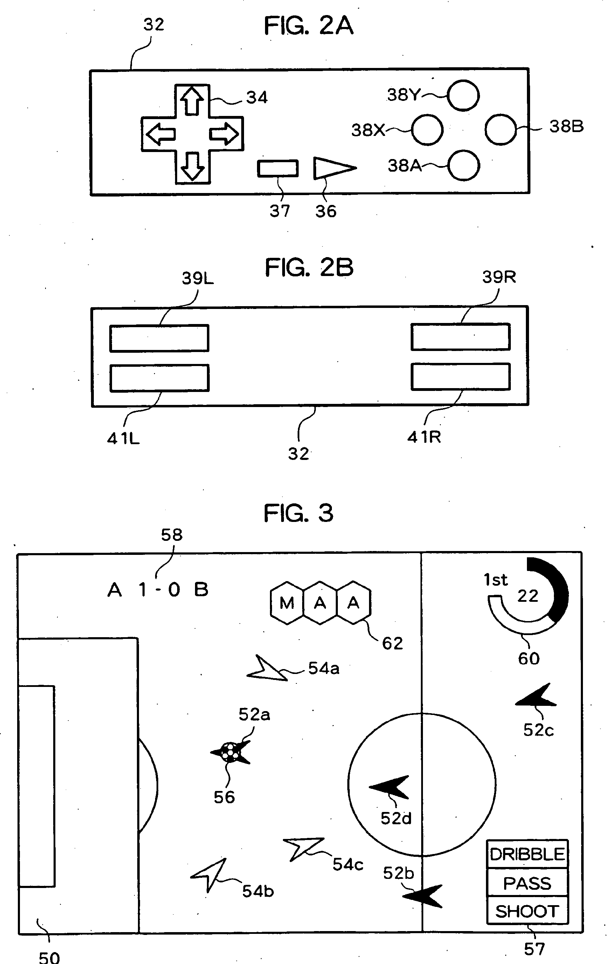

FIG. 2 is diagrams showing an example of the controller 32. The controller 32 shown in FIG. 2 is a general-purpose game controller. As shown in FIG. 2(a), the controller 32 has on its top surface a direction button 34, a start button 36, a select button 37 and buttons 38X, 38Y, 38A and 38B. As shown in FIG. 2(b), the controller 32 has on its back wall buttons 41L and 41R, which are placed on the left side and right side of the top half of the back wall, respectively, and buttons 39L and 39R, which are placed on the left side and right side of the bottom half of the back wall, respectively. The direction button 34 has a cross shape and is usually used to set a direction in which a character or the cursor is moved. The start button 36 is a small-sized push button having a triangular shape, and is usually used to start a game, forcibly terminate a game, or the like. The select button 37 is usually used to display a given menu screen. The buttons 38X, 38Y, 38A, 38B, 39L, 39R, 41L and 41R are used for other game operations.

The game machine 10 having the above-mentioned configuration provides a soccer simulation game (ball sport simulation game) simulating a soccer match in which points are scored by putting a ball (mobile object) in a goal (target marked out with a target frame).

In this game, a match progresses as player turns and opponent turns are alternately played out; the player turn is a turn in which soccer players of an operation subject team act in accordance with instructions from a game player, and the opponent turn is a turn in which soccer players of a team that the operation subject team competes against (hereinafter referred to as opposing team) act in accordance with instructions from another game player or under control of the computer. Actions taken by the soccer players in the respective turns change the course of the game, and when the number of times the player turn and the opponent turn are played out reaches a given count, the game ends.

FIG. 3 shows an example of a game screen of the soccer simulation game according to the present invention. In this game screen, a game player selects one of the soccer players of the operation subject team and chooses what action is to be taken by the soccer player (instruction receiving soccer player). As shown in FIG. 3, the game screen displays soccer player characters 52a through 52d and 54a through 54c, a ball character 56, an action menu 57, a score image 58, an elapsed time image 60, and an action instructing situation image 62.

The soccer player characters 52a through 52d and 54a through 54c indicate the current positions and directions (postures) of the respective soccer players in a game field 50. The soccer player characters 52a through 52d represent soccer players of the operation subject team (Team A) whereas the soccer player characters 54a through 54c represent soccer players of the opposing team (Team B).

The ball character 56 indicates the current position of the ball. When the ball is in the possession of (held by) one of the soccer players, the position of the ball matches the position of a soccer player character that is in possession of the ball. In other words, the ball character 56 moves following the movement of the soccer player character in possession of the ball. In this embodiment, the ball character 56 is displayed superimposed on a soccer player character that is in possession of the ball. An example of FIG. 3 shows that the soccer player character 52a is in possession of the ball.

The action menu 57 shows options of actions an instruction receiving soccer player can take in the situation. For instance, when the instruction receiving soccer player is in possession of the ball, options "dribble", "pass", and "shoot" are displayed in the action menu 57. When the ball is in the possession of one of the teammate soccer players (soccer players belonging to the operation subject team other than the instruction receiving soccer player) or in a so-called "loose ball" situation where no one is in possession of the ball, for example, only an option "move" is displayed in the action menu 57. When a soccer player of the opposing team has control of the ball, for example, options "move" and "sliding" are displayed in the action menu 57. Preferably, "sliding" is displayed only when the soccer player in possession of the ball is within a given range from the position of the instruction receiving soccer player. The game player chooses from the action menu 57 an action that the instruction receiving soccer player is to take by operating the direction button 34 and a given enter button.

The score image 58 shows points scored by the two teams. The elapsed time image 60 shows the elapsed time and remaining time of the game. The instructed action image 62 shows types of action that can be commanded in the current turn and the remaining count of the action. An image "M" shows the remaining number of times the action "move" or "dribble" is allowed to be commanded in the current turn. An image "A" shows the remaining number of times the action "pass" or "shoot" is allowed to be commanded in the current turn.

When the game player chooses "dribble" or "move" from the action menu 57, what needs to be determined next are an objective position to which the instruction receiving soccer player dribbles or moves and a posture (direction) taken by the instruction receiving soccer player at the objective position. The objective position that can be set in this case is limited to points within a given range from the current position of the instruction receiving soccer player. Once the game player determines the objective position and a posture at the objective position, given dribble (move) executing processing is implemented. Based on the result of the processing, the game machine 10 updates information such as the ball position and the position and posture of the instruction receiving soccer player as well as the game screen.

When the game player chooses "pass" from the action menu 57, what needs to be determined next are a pass objective position at which the passed ball will arrive and a course (trajectory) along which the ball will be passed. Once the game player determines the objective position and course of the pass, pass success/failure determining processing is executed. In this processing, whether a pass should succeed or fail is determined based on information such as the ball position, the pass objective position, the pass course, a parameter for the skill of the instruction receiving soccer player, and the positions and skill parameters of soccer players in the opposing team, and random numbers. The game machine 10 updates information such as the ball position and which soccer player has control of the ball, as well as the game screen.

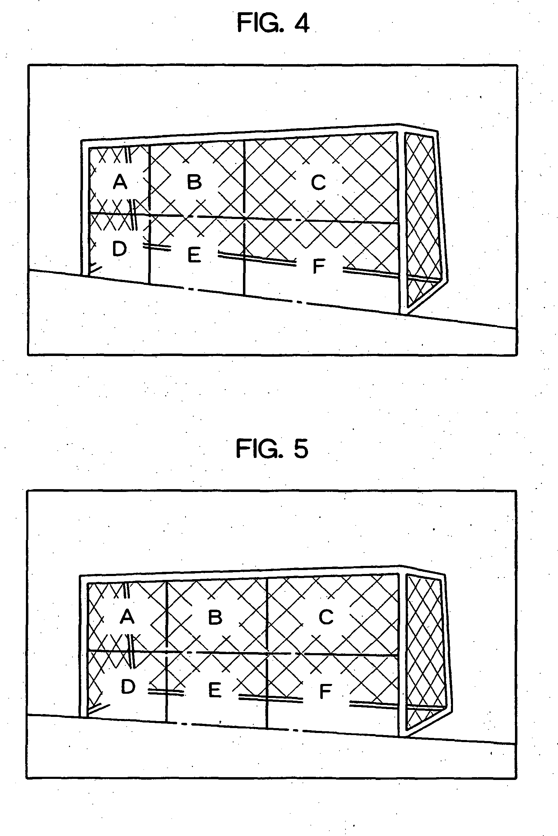

When the game player chooses "shoot" from the action menu 57, the game machine 10 displays a shoot target selecting screen to enable the game player to specify which section or point inside the goal frame the ball is to be shot at. FIGS. 4 through 8 show an example of the shoot target selecting screen.

As shown in FIGS. 4 through 8, in the shoot target selecting screen, an image representing the goal (image representing the goal frame) and an image of multiple goal sections are displayed. In the example of FIGS. 4 through 8, the inside of the goal (area marked out with the goal frame) is divided vertically into two sections and horizontally into three sections, six goal sections "A" through "F" in total. The goal sections "A", "B", and "C" are shown on the top row from left to right, and sections "D", "E", and "F" are shown on the bottom row from left to right.

When "shoot" is chosen from the action menu 57 in this embodiment, one of the shoot target selecting screens shown in FIGS. 4 through 8 is displayed in accordance with the position of the instruction receiving soccer player (soccer player that is to shoot the ball).

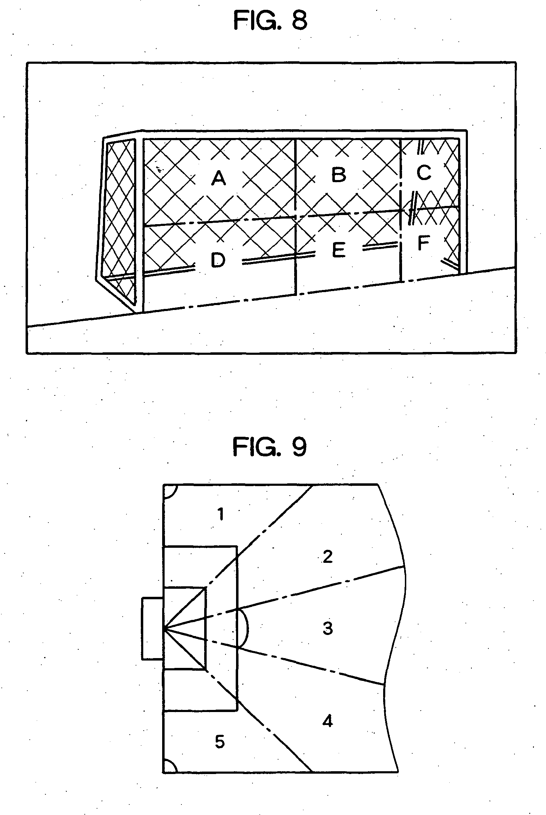

In this embodiment, a plurality of areas (hereinafter referred to as field sections) are set in the game field based on the angle between the frontal direction (reference direction) of the goal and a direction running from a reference position of the goal to a point in the game field as shown in FIG. 9. In an example of FIG. 9, five field sections "1" through "5" are set in the game field. The reference position of the goal in the example of FIG. 9 is a point on the goal line that is equidistant from the left and right goal posts (left and right sides of the goal frame).

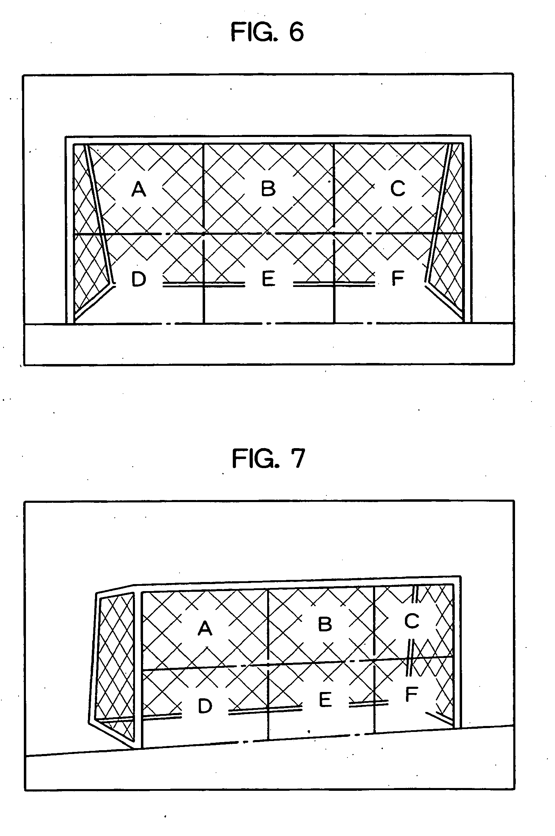

When the instruction receiving soccer player is to shoot the ball from an approximately frontal direction of the goal, in other words, from the field section "3", the shoot target selecting screen shown in FIG. 6 is displayed. This screen shows the goal sections "A" through "F" to be of substantially the same size (area).

When the direction running from the reference position of the goal to the shoot position is to the left of the frontal direction of the goal by degrees that are equal to or larger than a first angle and smaller than a second angle, in other words, when the instruction receiving soccer player shoots the ball from the field section "2", the shoot target selecting screen shown in FIG. 5 is displayed. In this screen, the goal sections "C" and "F" on the right hand side of the screen are wider than the goal sections "B" and "E" at the center of the screen. The goal sections "A" and "D" on the left hand side of the screen are narrower than the goal sections "B" and "E" at the center of the screen.

When the direction running from the reference position of the goal to the shoot position is to the left of the frontal direction of the goal by degrees that are larger than the second angle, in other words, when the instruction receiving soccer player shoots the ball from the field section "1", the shoot target selecting screen shown in FIG. 4 is displayed. In this screen, as in the screen of FIG. 5, the goal sections "C" and "F" on the right hand side of the screen are wider than the goal sections "B" and "E" at the center of the screen. The goal sections "A" and "D" on the left hand side of the screen are narrower than the goal sections "B" and "E" at the center of the screen. However, the right hand side goal sections "C" and "F" in FIG. 4 are wider than those in FIG. 5, and the left hand side goal sections "A" and "D" in FIG. 4 are narrower than those in FIG. 5. In other words, the width difference between the right hand side goal sections "C" and "F" and the left hand side goal sections "A" and "D" is larger in FIG. 4 than in FIG. 5.

When the direction running from the reference position of the goal to the shoot position is to the right of the frontal direction of the goal by degrees that are equal to or larger than the first angle and smaller than the second angle, in other words, when the instruction receiving soccer player shoots the ball from the field section "4", the shoot target selecting screen shown in FIG. 7 is displayed. In this screen, the goal sections "C" and "F" on the right hand side of the screen are narrower than the goal sections "B" and "E" at the center of the screen. The goal sections "A" and "D" on the left hand side of the screen are wider than the goal sections "B" and "E" at the center of the screen.

When the direction running from the reference position of the goal to the shoot position is to the right of the frontal direction of the goal by degrees that are larger than the second angle, in other words, when the instruction receiving soccer player shoots the ball from the field section "5", the shoot target selecting screen shown in FIG. 8 is displayed. In this screen, as in the screen of FIG. 7, the goal sections "C" and "F" on the right hand side of the screen are narrower than the goal sections "B" and "E" at the center of the screen. The goal sections "A" and "D" on the left hand side of the screen are wider than the goal sections "B" and "E" at the center of the screen. However, the right hand side goal sections "C" and "F" in FIG. 8 are narrower than those in FIG. 7, and the left hand side goal sections "A" and "D" in FIG. 8 are wider than those in FIG. 7. In other words, the width difference between the right hand side goal sections "C" and "F" and the left hand side goal sections "A" and "D" is larger in FIG. 8 than in FIG. 7.

As has been described, in the shoot target selecting screen, the goal sections are displayed such that, when the shoot position is on the right hand side of the goal, in other words, when the direction running from the reference position of the goal to the shoot position is to the left of the frontal direction of the goal, the width (area) of the goal sections "C" and "F" on the right hand side of the screen becomes larger whereas the width (area) of the goal sections "A" and "D" on the left hand side of the screen becomes smaller in proportion to the amount of deviation (angle) from the frontal direction. Similarly, the goal sections are displayed such that, when the shoot position is on the left hand side of the goal, in other words, when the direction running from the reference position of the goal to the shoot position is to the right of the frontal direction of the goal, the width of the goal sections "A" and "D" on the left hand side of the screen becomes wider whereas the width of the goal sections "C" and "F" on the right hand side of the screen becomes narrower in proportion to the amount of deviation from the frontal direction.

In the shoot target selecting screen described above, the game player operates the direction button 34 and a given enter button to choose a goal section at which the ball is to be shot. Once the game player chooses one of the goal sections "A" through "F" as a shoot target, the shoot success/failure determining processing is executed in order to determine whether the shoot should succeed or fail.

In the shoot success/failure determining processing, whether or not the shot ball should go into the goal section chosen as a shoot target by the game player is determined, as well as whether or not the shot should be blocked by a goalkeeper. A scoring event occurs when it is determined that the shot ball should go into the goal section chosen as a shoot target by the game player and that the shot should not be blocked by the goalkeeper.

In the shoot success/failure determining processing, an increase in width of the goal section chosen as a shoot target raises the probability that it will be determined that the shot ball should go into this goal section, and also the probability that it will be determined that the shot should be blocked by the goalkeeper. In contrast, a decrease in width of the goal section chosen as a shoot target lowers the probability that it will be determined that the shot ball should go into this goal section, and also the probability that it will be determined that the shot should be blocked by the goalkeeper as well. In other words, depending on which goal section is chosen as a shoot target, the probability that the shot ball will go into the target goal section and the probability that the shot will be blocked by the goalkeeper vary even in cases where the same soccer player shoots the ball toward the goal defended by the same goalkeeper. The game player can thus enjoy formulating a strategy in choosing at which goal section the shot should be aimed from the current position, while taking into account the ability of the soccer player that is to shoot the ball and the ability of the goalkeeper; for example, when the ability of the goalkeeper is high, the game player can decide to sacrifice the shoot accuracy and choose a goal section where the shot is less likely to be blocked by the goalkeeper.

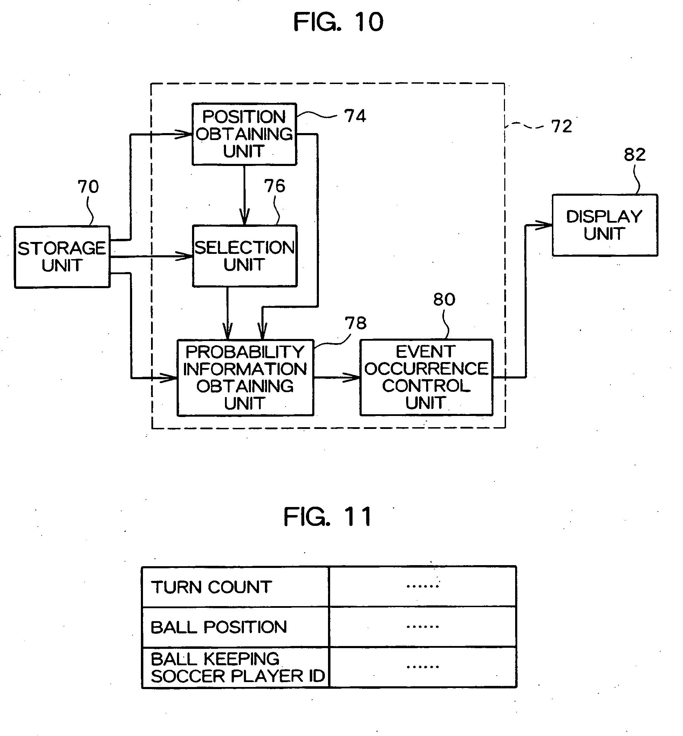

Now, functional blocks implemented in the game machine 10 will be described. FIG. 10 is a diagram focusing on some of the functional blocks in the game machine10 that are related to the present invention. As shown in FIG. 10, the game machine 10 includes a storage unit 70, a control unit 72 and a display unit 82. Those functions are implemented by having a computer such as a household game machine, a commercial game machine, a portable game machine, a cellular phone, a personal digital assistants, or a personal computer execute a program (supplied to the computer through a DVD-ROM or other computer-readable information storage media, or through a communication network).

The storage unit 70 is composed mainly of the DVD-ROM 25, the main storage 26, a hard disk storage device, and the like. The storage unit 70 stores, for example, data shown in FIGS. 11, 12 and 13.

FIG. 11 shows a game situation information table for identifying the situation of the game. As shown in FIG. 11, the game situation information table is configured to include "turn count", "ball position" and "ball keeping soccer player ID" fields. In the "turn count" field, the count of turns executed up to the present, i.e., the sum of the count of player turns that have been executed up to the present and the count of opponent turns that have been executed up to the present, is stored. In the "ball position" field, information for identifying the current position of the ball is stored. In the "ball keeping soccer player ID" field, information for identifying a soccer player that is in possession of the ball (for example, soccer player ID) is stored. When the ball is in possession of none of the soccer players, namely, in the loose ball state, information indicating this fact is stored in the "ball keeping soccer player ID" field (for example, 0 or NULL is stored or the field is left blank). In addition to those pieces of information, the game situation information table stores information indicating the score, information indicating the issued status of yellow card and red card warnings, information indicating the status of replacement of soccer players.

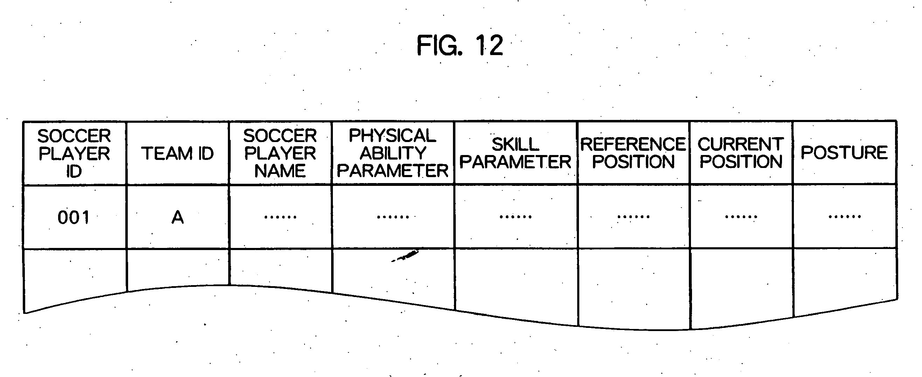

FIG. 12 shows a soccer player information table for management of information indicating the ability and current condition of a soccer player. As shown in FIG. 12, the player information table is configured to include "soccer player ID", "team ID", "soccer player name", "physical ability parameter", "skill parameter", "reference position", "current position", and "posture" fields. In the "soccer player ID" field, identification information for identifying each soccer player is stored. In the "team ID" field, information for identifying to which team each player belongs is stored. In the "physical ability parameter" field, various types of parameter information (numerical information) indicating "dash", "stamina" and other similar physical abilities are stored. In the "skill parameter" field, various types of parameter information (numerical information) indicating the skill in "pass", "shoot", "dribble", "defense", and the like are stored. In the "reference position" field, information for identifying where each soccer player is positioned at the start of the game, (kickoff) is stored. In the "current position" field, information for identifying the current position of each soccer player is stored. In the "posture" field, information for identifying the posture of each soccer player, in particular, which direction the soccer player faces (for example, frontal direction) is stored.

In addition to those pieces of information, the soccer player information table may store numerical information indicating the remaining stamina of each soccer player, information indicating accumulated cards of each soccer player, information indicating the past points scored by each soccer player and the soccer player' s past assistance count, and the like. The initial value of the numerical information indicating the remaining stamina of each soccer player is determined from, for example, the "stamina" parameter, and is reduced by a given amount each time the soccer player performs an action. For a soccer player whose numerical information indicating the remaining stamina has a value equal to or smaller than a given value, the values of parameters indicative of the physical ability and skill may be lowered when those parameters are referred to in various types of game processing.

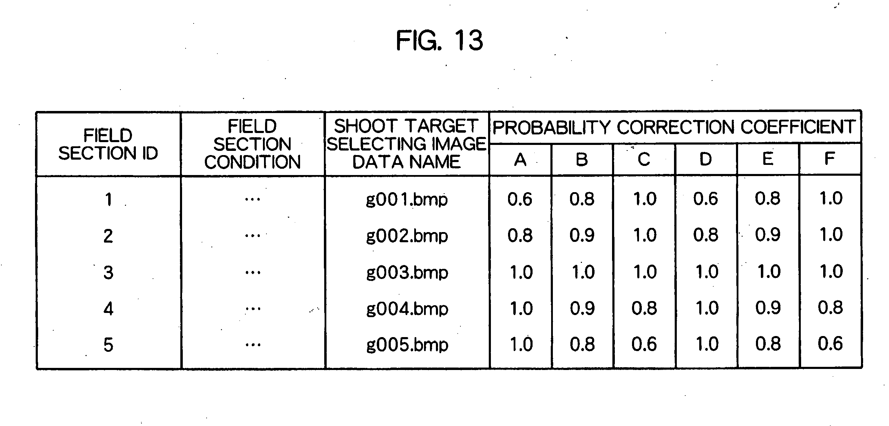

FIG. 13 shows a field section information table. The field section information table stores information about a plurality of field sections set in the game field. As shown in FIG. 13, the field section information table is configured to include "field section ID", "field section condition", "shoot target selecting image data name", and "probability correction coefficient" fields.

In the "field section ID" field, identification information for identifying a plurality of field sections set in the game field is stored. In the "field section condition" field, a condition for identifying a field section is stored. In other words, a condition about a point in the game field that is to be included in the field section is stored. This condition may be expressed as, for example, a condition (angle condition) about the angle between a direction running from the reference position of the goal to a point in the game field and the frontal direction of the goal. The reference position of the goal in this case may be, for example, a point on the goal line that is equidistant from the left and right goal posts of the goal.

In the "shoot target selecting image data name" field, information for identifying image data of a shoot target selecting image is stored. For instance, the file name of image data for displaying the shoot target selecting image is stored. The shoot target selecting image is, for example, an image for displaying a shoot target selecting screen such as those shown in FIGS. 4 through 8. The shoot target selecting image is an image that includes a goal image (target frame image) showing the goal (target frame), a border image showing borders between the goal sections, and images respectively showing goal section IDs. The shoot target selecting image uses the goal image and the border image to show the plurality of goal sections set inside the goal. The images showing goal section IDs are each displayed in association with a part of the goal image that is defined by the border image.

In the "probability correction coefficient" field, a probability correction coefficient (probability information) is stored. The probability correction coefficient stored in the "probability correction coefficient field" is specific to each goal section. In other words, the probability correction coefficient is stored in association with the combination of a field section ID and a goal section ID. The probability correction coefficient is referred to in the shoot success/failure determining processing. This will be described later.

In an example of FIG. 13, the goal sections have the same probability correction coefficient value for the field section "3". For the field section "1" or "2", the probability correction coefficient values of the goal sections become smaller from right to left. In other words, the goal sections "C" and "F" have the largest probability correction coefficient value and the goal sections "A" and "D" have the smallest probability correction coefficient value. In the field section "1" where the angle between the frontal direction of the goal and a direction running from the reference position of the goal to the shoot position is larger than in the field section "2", the difference between the probability correction coefficient value of the goal sections "C" and "F" and the probability correction coefficient value of the goal sections "A" and "D" is larger than in the field section "2".

For the field section "4" or "5", the probability correction coefficient values of the goal sections become smaller from left to right. In other words, the goal sections "A" and "D" have the largest probability correction coefficient value and the goal sections and "F" have the smallest probability correction coefficient value. In the field section "5" where the angle between the frontal direction of the goal and a direction running from the reference position of the goal to the shoot position is larger than in the field section "4", the difference between the probability correction coefficient value of the goal sections "A" and "D" and the probability correction coefficient value of the goal sections "C" and "F" is larger than in the field section "4".

The storage unit 70 stores various types of image data in addition to the above-mentioned data. For example, the storage unit 70 stores image data of the shoot target selecting image as well as still image data, animation data, movie data, or other image data that shows how soccer players act and the progress of the game. Those pieces of image data are read as the need arises, and an image created based on the read image data is displayed on the game screen.

The control unit 72 is composed mainly of the microprocessor 14 and the main storage 26. The control unit 72 accepts an input of an action instructing command directed to a soccer player of the operation subject team in the player turn. For instance, the control unit 72 makes the display unit 82 display a game screen such as the one shown in FIG. 3, thereby prompting the game player to input an action instructing command. The control unit 72 judges that an action instructing command has been chosen by the game player based on an operation signal entered from the controller 32. Upon receipt of an action instructing command, the control unit 72 executes game processing that corresponds to the received action instructing command to update data stored in the storage unit 70 (e.g., data in the game situation information table and the soccer player information table) and the game screen.

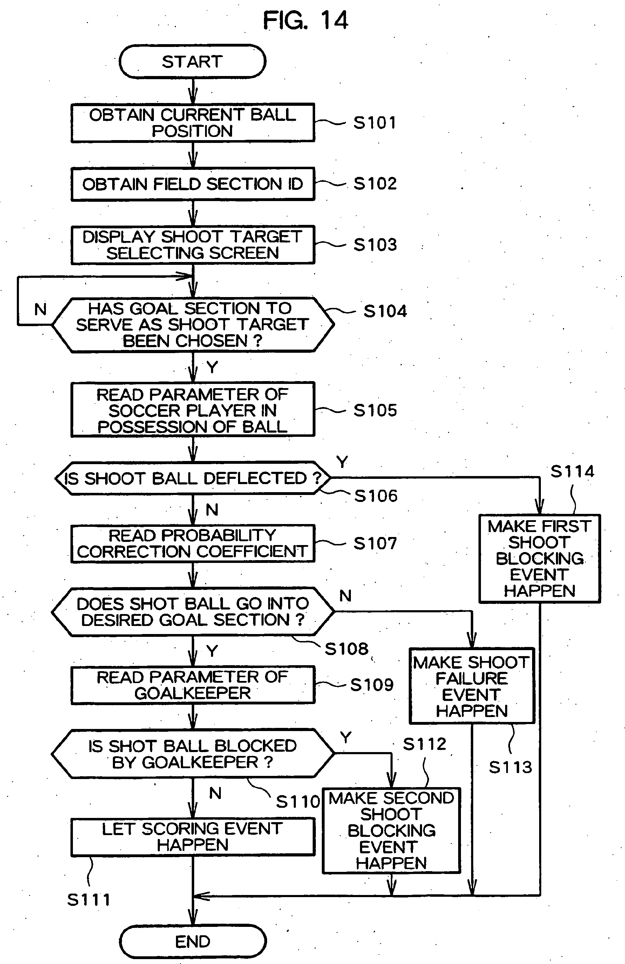

When the received command is a "shoot" command, the control unit 72 executes shoot success/failure determining processing (see FIG. 14) described later. The control unit 72 includes a position obtaining unit 74, a selection unit 76, a probability information obtaining unit 78, and an event occurrence control unit 80 as components for executing the shoot failure/success determining processing.

The position obtaining unit 74 obtains the current position of the ball. For example, the position obtaining unit 74 refers to the "ball position" field of the game situation information table to obtain the current position of the ball. Alternatively, the position obtaining unit 74 may refer to the game situation information table or the soccer player information table to obtain the current position of a soccer player that is in possession of the ball as the current position of the ball

The selection unit 76 has the game player choose one of the goal sections "A" through "F" (options) as a shoot target. The selection unit 76 reads a shoot target selecting image that is associated with a field section including the current ball position that obtained by the position obtaining unit 74, and displays a shoot target selecting screen (see FIGS. 4 through 8) based on the read image, to thereby prompt the game player to choose a goal section as a shoot target. The selection unit 76 then obtains the choice made by the game player on the shoot target selecting screen.

The probability information obtaining unit 78 obtains a probability correction coefficient corresponding to the combination of the field section including the current ball position that was obtained by the position obtaining unit 74 and the goal section that is selected by the selection unit 76, based on the content of the field section information table.

The event occurrence control unit 80 determines whether to let a scoring event (given event) happen based on the probability correction coefficient obtained by the probability information obtaining unit 78. For instance, the event occurrence control unit 80 determines whether or not the shot ball should go into the goal section selected by the selection unit 76 based on the probability correction coefficient obtained by the probability information obtaining unit 78. The event occurrence control unit 80 also determines, for example, whether or not the shot should be blocked by the goalkeeper based on the probability correction coefficient obtained by the probability information obtaining unit 78. Details thereof will be described later (see FIG. 14).

Other than the above-mentioned command, the control unit 72 receives an action instructing command that is entered by the opponent game player in the opponent turn, and executes game processing corresponding to the received action instructing command. Alternatively, the control unit 72 determines, in accordance with a given action instructing algorithm, what action instruction should be given to a soccer player of the opposing team in the opponent turn, and executes game processing corresponding to the decision.

At the start or end of each turn, the control unit 72 counts how many turns have been executed since the start of the game, and stores the result in the "turn count" field of the game situation information table. The control unit 72 also holds information indicating whether the current turn is the player turn or the opponent turn. When a given turn ending condition is encountered in the player turn, the control unit 72 shifts the game to the opponent turn. When a given turn ending condition is encountered in the opponent turn, the control unit 72 shifts the game to the player turn. Here, the term "turn" refers to a turn to give action instructions to soccer players. A turn ending condition is, for example, a condition about whether or not a given turn ending operation has been made by the game player. The turn enduing condition may include a condition about whether or not the ball in possession of a soccer player of the operation subject team has been taken by a soccer player of the opposing team. The turn ending condition may further include a condition about whether or not a given action instructing command has been entered a given number of times.

The display unit 82 is formed by the monitor 18. The display unit 82 displays a game screen showing the occurrence of a scoring event based on the decision made by the event occurrence control unit 80. Specifically, the display unit 82 displays a game screen showing the occurrence of a scoring event when the event occurrence control unit 80 determines that the scoring event should happen. The display unit 82 also displays the game screen shown in FIG. 3 based on the contents of the game situation information table and the soccer player information table, and the shoot target selecting screens shown in FIGS. 4 through 8.

Now, a description will be given on processing that is executed in the game machine 10 at given time intervals (e.g., at 1/30-second intervals). Described here is shoot success/failure determining processing, which is part of this regularly executed processing. The shoot success/failure determining processing is executed when the control unit 74 receives an input of a "shoot" command. FIG. 14 is a flow chart illustrating the shoot success/failure determining processing. This processing is implemented by having the game machine 10 execute a program that is supplied to the computer through a DVD-ROM or other computer-readable information storage media, or through a communication network.

As shown in FIG. 14, in the shoot success/failure determining processing, the position obtaining unit 74 obtains the current position of the ball first (S101). For example, the position obtaining unit 74 obtains the current position of the ball based on the content of the "ball position" field of the game situation information table. The position obtaining unit 74 then obtains a field section ID corresponding to the current position of the ball (S102). For example, the position obtaining unit 74 refers to the field section information table to obtain a field section ID that is associated with a field section condition that the current ball position obtained in S101 satisfies.

Next, the selection unit 76 displays a shoot target selecting screen (S103). Specifically, the selection unit 76 reads the image data name of a shoot target selecting image corresponding to the field section ID obtained in S102 from the field section information table. The selection unit 76 then reads image data that is identified by this image data name from the storage unit 70, and displays a shoot target selecting screen based on the read image data.

The selection unit 76 judges whether or not a goal section is chosen as a shoot target on the shoot target selecting screen (S104). When one of the goal sections is chosen, the selection unit 76 obtains the goal section ID of the chosen goal section and has the main storage 26 keep the obtained ID. The control unit 72 in this case reads the physical ability parameter and skill parameter of the soccer player that is in possession of the ball (S105). For example, the control unit 72 refers to the contents of the game situation information table and the soccer player information table to obtain the physical ability parameter and skill parameter of the soccer player that is in possession of the ball.

The control unit 72 next determines whether or not the shot should be deflected by one of the soccer players (other than goalkeeper) of the opposing team before reaching the goal (S106). For example, the control unit 72 judges whether or not a soccer player of the opposing team is positioned along or near the shoot course (trajectory from the current position of the ball to the goal). Whether or not a soccer player of the opposing team is positioned along the shoot course is judged by judging, for each soccer player of the opposing team, whether or not the shoot course is within a first block range set based on the position of the soccer player. If the shoot course is within the first block range of one of the soccer players, this soccer player is judged as being positioned along the shoot course. It is then judged that the shoot will be deflected by the soccer player.

Whether or not a soccer player of the opposing team is positioned near the shoot course is judged by judging, for each soccer player of the opposing team, whether or not the shoot course is within a second block range (range larger than the first block range) set based on the position of the soccer player. If the shoot course is within the second block range of one of the soccer players, this soccer player is judged as being positioned near the shoot course. Then, whether or not the shot should be intercepted or deflected by the soccer player is determined in accordance with the probability corresponding to the soccer player (probability determined based on the physical ability parameter and skill parameter of the soccer player).

In a case where it is determined in S106 that the shot should be deflected by a soccer player of the opposing team, the event occurrence control unit 80 makes a first shoot blocking event happen (S114). For instance, the event occurrence control unit 80 reads an image showing the shot being intercepted or deflected by a soccer player of the opposing team, and has the display unit 82 display a game screen that includes the read image. For example, the event occurrence control unit 80 also updates data stored in the storage 70 such that the data indicates a state in which the shot is intercepted or cut by a soccer player of the opposing team. For example, the event occurrence control unit 80 updates the "ball position" field and the "ball keeping soccer player ID" field in the game situation information table.

On the other hand, in a case where it is determined in S106 that the shot should not be deflected by a player of the opposing team, the probability information obtaining unit 78 reads a probability correction coefficient (S107). For instance, the probability information obtaining unit 78 refers to the field section information table to read a probability correction coefficient corresponding to the combination of the field section ID obtained in S102 and the goal section ID kept in the main storage 26 in 5104.

After that, the event occurrence control unit 80 determines whether or not the shot ball should go into the goal section chosen as a shoot target by the game player (S108). This decision is made based on, for example, the physical ability parameter and skill parameter (e.g., parameter indicative of the accuracy of shoot) of the soccer player that is to shoot the ball, the probability correction coefficient obtained in S107, and random numbers.

In this step, a reference probability is calculated from the physical ability parameter and skill parameter of the soccer player that is to shoot the ball. The reference probability is multiplied by the probability correction coefficient obtained in S107 in order to calculate a corrected probability. Whether the shot ball should go into the target goal section or not is determined from the corrected probability and random numbers. In other words, in the game machine 10, whether a shot ball should go into a target goal section or not is determined based not only on parameters of a soccer player that is to shoot the ball but also on a ball position from which the ball is shot (more specifically, angle between a direction running from the reference position of the goal to the ball position and the frontal direction of the goal) and the choice of target goal section.

When it is determined that the shot ball should not go into the target goal section (S108), the event occurrence control unit 80 judges that the shot ball has not gone into the goal. Then the event occurrence control unit 80 makes a shoot failure event happen (S113). For instance, the event occurrence control unit 80 reads an image showing the shot traveling outside the goal frame, and has the display unit 82 display a game screen that includes the read image. The event occurrence control unit 80 also updates data stored in the storage unit 70 such that the data indicates a goal kick state. The event occurrence control unit 80 updates, for example, the "ball position" field and the "ball keeping soccer player ID" field in the game situation information table and the "current position" field in the soccer player information table.

On the other hand, when it is determined that the shot ball should go into the target goal section (S108), the event occurrence control unit 80 reads the physical ability or skill parameter of the goalkeeper of the opposing team out of the soccer player information table (S109).

The event occurrence control unit 80 then determines whether or not the shot should be blocked by the goalkeeper of the opposing team (S110). This decision is made based on, for example, the physical ability parameter and skill parameter (e.g., parameter indicative of the shoot ability) of the soccer player that is to shoot the ball, the physical ability parameter and skill parameter (e.g., parameter indicative of the catching ability or the punching ability) of the goalkeeper, the probability correction coefficient obtained in S107, and random numbers.

In this step, a reference probability is calculated based on the physical ability parameter and skill parameter of the soccer player that is to shoot the ball and the physical ability parameter and skill parameter of the goalkeeper. The reference probability is multiplied by the probability correction coefficient obtained in S107 in order to calculate a corrected probability. Whether the shot should be blocked by the goalkeeper or not is determined based on the corrected probability and random numbers. In other words, in the game machine 10, whether a shot should be blocked by a goalkeeper or not is determined based not only on parameters of a soccer player that is to shoot the ball and of the goalkeeper, but also on a ball position from which the ball is shot (more specifically, angle between a direction running from the reference position of the goal to the ball position and the frontal direction of the goal) and the choice of shoot target goal section.

When it is determined that the shot should be blocked by the goalkeeper (S110), the event occurrence control unit 80 makes a second shoot blocking event happen (S112). For instance, the event occurrence control unit 80 reads an image showing the shot being blocked by the goalkeeper, and has the display unit 82 display a game screen that includes the read image. The event occurrence control unit 80 also updates data stored in the storage unit 70 such that the data indicates a state in which the shot ball is caught or punched by the goalkeeper. The event occurrence control unit 80 updates, for example, the "ball position" field and the "ball keeping soccer player ID" field in the game situation information table and the "current position" field in the soccer player information table.

On the other hand, when it is determined that the shot should not be blocked by the goalkeeper (S110), the event occurrence control unit 80 lets a scoring event happen (S111). For instance, the event occurrence control unit 80 reads an image showing the ball successfully shot into the goal (point being scored), and has the display unit 82 display a game screen that includes the read image. The event occurrence control unit 80 also updates data stored in the storage unit 70. The event occurrence control unit 80 updates, for example, information indicating the score such that a point is added to the operation subject team. The event occurrence control unit 80 also updates the "ball position" field and the "ball keeping soccer player ID" field in the game situation information table and the "current position" field in the soccer player information table such that a kickoff state is indicated.

As has been described, in the game machine 10 according to this embodiment, both the probability that a shot ball will go into a target goal section and the probability that the shot will be blocked by the goalkeeper rise or drop depending on the shoot position (more specifically, angle between a direction running from the reference position of the goal to the shoot position and the frontal direction of the goal) and which goal section is chosen as a shoot target. This enables a game player to enjoy formulating a strategy in choosing at which goal section the shot should be aimed from the current position while taking into account the ability of the soccer player that is to shoot the ball and the ability of the goalkeeper; for example, when the ability of the goalkeeper is high, the game player can decide to sacrifice the shooting accuracy and choose a goal section where the shot is less likely to be blocked by the goalkeeper. Accordingly, the game machine 10 can raise the interest of shooting the ball in a soccer simulation game.

The present invention is not limited to the embodiment described above.

For instance, the game machine 10, which in the above description is formed mainly of the household game machine 11, may instead have a portable game machine as its main component.

Also, for instance, while an example of applying the present invention to a soccer simulation game has been described above, the present invention is applicable to other ball sport simulation games, ice hockey games, and other similar games of competition in making a given event happen by moving a mobile object toward a target that is marked out with a target frame.

Also, for instance, in the above description, a game player chooses one of the goal sections "A" through "F" as a shoot target. However, a game player may be allowed to choose a plurality of goal sections as targets. For example, a game player may be allowed to choose two adjacent goal sections as targets.

Also, for instance, in the above description, a border image displayed on a shoot target selecting screen (see FIGS. 4 through 8) is stored in the storage unit 70 in advance. However, the shoot position (current position of the ball) may be obtained each time a shoot target selecting screen is displayed so that a border image is created based on the obtained shoot position.

Also, for instance, in the above description, the probability correction coefficient is stored in the field section information table (see FIG. 13) in association with the combination of a field section and a goal section. However, the probability correction coefficient may be calculated by a given function each time the shoot success/failure determining processing (see FIG. 14) is executed.

Also, for instance, in the above description, whether or not a shot ball should go into a goal section chosen by the game player and whether or not the shot should be blocked by the goalkeeper are determined with the use of the same probability correction coefficient. However, whether or not a shot ball should go into a goal section chosen by the game player and whether or not the shot should be blocked by the goalkeeper may be determined with the use of different probability correction coefficients. In this case, probability information including a first probability correction coefficient and a second probability correction coefficient may be stored in the field section information table (see FIG. 13) in correspondence with the combination of a field section ID and a goal section ID. The first probability correction coefficient may be used in determining whether or not a shot ball should go into a goal section chosen by the game player. The second probability correction coefficient may be used in determining whether or not the shot should be blocked by the goalkeeper.

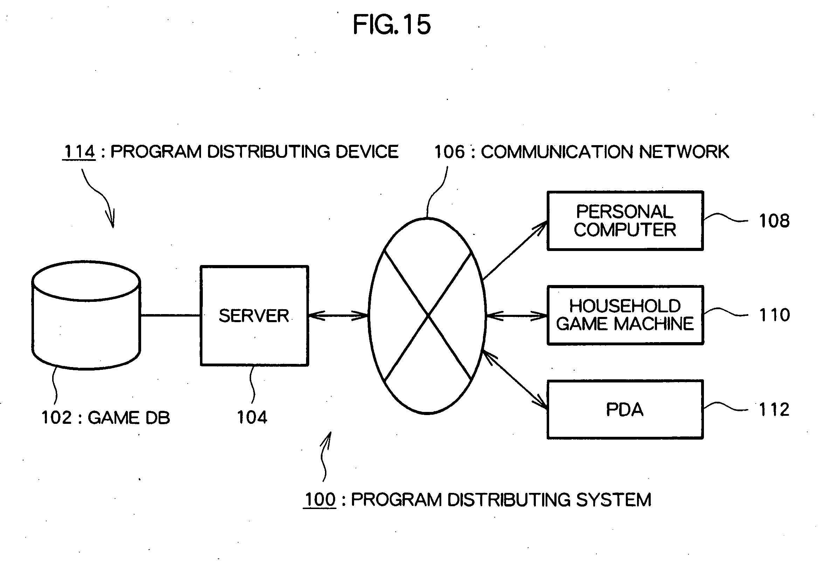

Also, for instance, in the above-mentioned description, the program is supplied to the household game machine 11 through the DVD-ROM 25 as an information storage medium. However, the program may be distributed to the household game machine 11 via a communication network. FIG. 15 is a diagram showing the overall configuration of a program distribution system that uses a communication network. A program distribution method according to the present invention is described with reference to FIG. 15. As shown in FIG. 15, this program distribution system 100 includes a game database 102, a server 104, a communication network 106, a personal computer 108, a household game machine 110, and a PDA (Personal Digital Assistant) 112. Of those, the game database 102 and the server 104 constitute a program distribution device 114. The communication network 106 is configured to include, for example, the Internet or a cable TV network. In this system, the game database (information storage medium) 102 stores the same program as the one stored in the DVD-ROM 25. A user requests delivery of a game through the personal computer 108, the household game machine 110, the PDA 112, or the like, and the request is transmitted to the server 104 via the communication network 106. The server 104 reads the program out of the game database 102 in accordance with the game delivery request, and sends the program to the personal computer 108, the household game machine 110, the PDA 112, or the like that has sent the game delivery request. A game is distributed here in response to a game delivery request, but the server 104 may send a game without being prompted by a request. It is not always necessary to distribute every program that is needed to play a game at once (lump-sum distribution), and only portions that are necessary for the current stage of the game may be distributed (installment distribution). Distributing a game via the communication network 106 in this manner enables a user to obtain the program with ease.

## Claims

1. A game machine (11) for providing a competitive game for making a given event happen by moving a mobile object (56) toward a target that is marked out with a target frame, wherein the game is a sport simulation game simulating a match in which points are scored by putting the mobile object (56) in a goal, which is an area marked out with a target frame, within which a plurality of target sections (A, B, C, D, E, F) are set out, and wherein a plurality of field sections (1, 2, 3, 4, 5) are set in the game field based on an angle between a reference direction of the goal and a direction running from a reference position of the goal to a point in the game field, the game machine (11) comprising:
probability information storing means (70) for storing probability information in correspondence with a combination of an angle condition and at least one of a plurality of options related to the target frame, the angle condition being about an angle between a reference direction of the target frame and a direction running from a reference position of the target frame to a position of the mobile object (56);
position obtaining means (74) for obtaining the position of the mobile object (56) when an operation is performed to move the mobile object (56) toward the target;
selection means (76) for selecting at least one of the plurality of options when an operation is performed to move the mobile object (56) toward the target;
probability information obtaining means (78) for obtaining probability information that is stored in the probability information storing means in correspondence with the combination of the angle condition that is satisfied by the mobile object (56) position obtained by the position obtaining means and the option that is selected by the selection means;
event occurrence control means (80) for determining whether to let the given event happen based on the probability information that is obtained by the probability information obtaining means (78); and
display means (18) for displaying a game screen that shows an occurrence of the given event based on a decision made by the event occurrence control means (80),
wherein the area of single target sections (A, B, C, D, E, F) is varied according to the deviation of the direction running from the reference position of the goal to the shoot position from the reference direction of the goal.

2. A game machine (11) according to Claim 1, further comprising
target frame image storing means for storing a target frame image in correspondence with the angle condition, the target frame image representing the target frame,
wherein
the selection means (76) displays the target frame image that is stored in the target frame image storing means in correspondence with the angle condition that is satisfied by the mobile object position obtained by the position obtaining means (74).

3. A game machine (11) according to Claim 2, wherein
the selection means (76) displays images respectively representing the plurality of options in association with a part of the target which is marked out with the target frame represented by the target frame image.

4. A game machine (11) according to any one of Claims 1 through 3, wherein:
the game is a ball sport simulation game of competing for points scored by putting a ball in the goal, where the ball and the goal serve as the mobile object (56) and the target frame, respectively, the given event is a scoring event; and
an operation of moving the mobile object (56) toward the target is an operation of causing an operation subject to shoot the ball.

5. A game machine (11) according to Claim 4, wherein:
the event occurrence control means (80) includes:
first decision means for determining, when an operation is performed to cause the operation subject to shoot, whether or not the resultant shot will go into the goal based on the probability information obtained by the probability information obtaining means (78); and
second decision means for determining, when an operation is performed to cause the operation subject to shoot, whether or not the resultant shot will be blocked by a goalkeeper based on the probability information obtained by the probability information obtaining means (78); and
the event occurrence control means (80) lets the scoring event happen based on decisions made by the first and second decision means.

6. A method of controlling a game machine (11) that provides a competitive game for making a given event happen by moving a mobile object (56) toward a target that is marked out with a target frame, wherein the game is a sport simulation game simulating a match in which points are scored by putting the mobile object (56) in a goal, which is an area marked out with a target frame, within which a plurality of target sections (A, B, C, D, E, F) are set out, and wherein a plurality of field sections (1, 2, 3, 4, 5) are set in the game field based on an angle between a reference direction of the goal and a direction running from a reference position of the goal to a point in the game field,
the method comprising:
a position obtaining step of obtaining a position of the movable object when an operation is performed to move the mobile object (56) toward the target;
a selection step of selecting at least one of the plurality of options when an operation is performed to move the mobile object (56) toward the target;
a probability information obtaining step of reading stored information out of probability information storing means which stores probability information in correspondence with a combination of an angle condition, which is about an angle between a reference direction of the target frame and a direction running from a reference position of the target frame to the position of the mobile object (56), and at least one of a plurality of options related to the target frame, and obtaining probability information that is stored in the probability information storing means in correspondence with the combination of the angle condition that is satisfied by the mobile object position obtained in the position obtaining step and the option that is selected in the selection step;
an event occurrence control step of determining whether to let the given event happen based on the probability information that is obtained in the probability information obtaining step;
a step of causing display means (18) to display a game screen that shows an occurrence of the given event based on a decision made in the event occurrence control step,
and
a step of varying the area of single target sections (A, B, C, D, E, F) according to the deviation of the direction running from the reference position of the goal to the shoot position from the reference direction of the goal.

7. An information storage medium (102) which stores a program for causing a computer to function as a game machine (11) that provides a competitive game for making a given event happen by moving a mobile object (56) toward a target that is marked out with a target frame, wherein the game is a sport simulation game simulating a match in which points are scored by putting the mobile object (56) in a goal, which is an area marked out with a target frame, within which a plurality of target sections (A, B, C, D, E, F) are set out, and wherein a plurality of field sections (1, 2, 3, 4, 5) are set in the game field based on an angle between a reference direction of the goal and a direction running from a reference position of the goal to a point in the game field,
wherein the program causes the computer to function as:
probability information storing means (70) for storing probability information in correspondence with a combination of an angle condition and at least one of a plurality of options related to the target frame, the angle condition being about an angle between a reference direction of the target frame and a direction running from a reference position of the target frame to a position of the mobile object (56);
position obtaining means (74) for obtaining the position of the movable object when an operation is performed to move the mobile object (56) toward the target;
selection means (76) for selecting at least one of the plurality of options when an operation is performed to move the mobile object (56)toward the target;
probability information obtaining means (78) for obtaining probability information that is stored in the probability information storing means in correspondence with the combination of the angle condition that is satisfied by the mobile object position obtained by the position obtaining means and the option that is selected by the selection means;
event occurrence control means (80) for determining whether to let the given event happen based on the probability information that is obtained by the probability information obtaining means; and
display means (18) for displaying a game screen that shows an occurrence of the given event based on a decision made by the event occurrence control means (80),
wherein the area of single target sections (A, B, C, D, E, F) is varied according to the deviation of the direction running from the reference position of the goal to the shoot position from the reference direction of the goal.

8. Computer program product for causing a computer to function as a game machine (11) that provides a competitive game for making a given event happen by moving a mobile object (56) toward a target that is marked out with a target frame, wherein the game is a sport simulation game simulating a match in which points are scored by putting the mobile object (56) in a goal, which is an area marked out with a target frame, within which a plurality of target sections (A, B, C, D, E, F) are set out, and wherein a plurality of field sections (1, 2, 3, 4, 5) are set in the game field based on an angle between a reference direction of the goal and a direction running from a reference position of the goal to a point in the game field,
wherein the computer program product causes the computer to function as:
probability information storing means (70) for storing probability information in correspondence with a combination of an angle condition and at least one of a plurality of options related to the target frame, the angle condition being about an angle between a reference direction of the target frame and a direction running from a reference position of the target frame to a position of the mobile object (56);
position obtaining means (74) for obtaining the position of the movable object when an operation is performed to move the mobile object (56) toward the target;
selection means (76) for selecting at least one of the plurality of options when an operation is performed to move the mobile object (56) toward the target;
probability information obtaining means (78) for obtaining probability information that is stored in the probability information storing means (70) in correspondence with the combination of the angle condition that is satisfied by the mobile object position obtained by the position obtaining means and the option that is selected by the selection means (76);
event occurrence control means (80) for determining whether to let the given event happen based on the probability information that is obtained by the probability information obtaining means (78); and
display means (18) for displaying a game screen that shows an occurrence of the given event based on a decision made by the event occurrence control means,
wherein the area of single target sections (A, B, C, D, E, F) is varied according to the deviation of the direction running from the reference position of the goal to the shoot position from the reference direction of the goal.

## Patentansprüche

1. Spielautomat (11) zum Bereitstellen eines Wettkampfspiels zum Wahrmachen eines gegebenen Ereignisses durch Bewegen eines mobilen Objekts (56) in Richtung eines Ziels, das mit einem Zielrahmen abgegrenzt ist,
wobei das Spiel ein Sportsimulationsspiel ist, das einen Wettkampf simuliert, in dem Punkte erzielt werden, indem das mobile Objekt (56) in ein Tor gebracht wird, welches ein Bereich ist, der durch einen Zielrahmen abgegrenzt ist, innerhalb dem eine Vielzahl von Zielabschnitten (A, B, C, D, E, F) festgelegt ist, und wobei eine Vielzahl von Feldabschnitten (1, 2, 3, 4, 5) in dem Spielfeld basierend auf einem Winkel zwischen einer Referenzrichtung des Ziels und einer Richtung, die von einer Referenzposition des Ziels zu einem Punkt in dem Spielfeld verläuft, festgelegt ist, wobei der Spielautomat umfasst:
Wahrscheinlichkeitsinformationsspeichermittel (70) zum Speichern von Wahrscheinlichkeitsinformationen entsprechend einer Kombination einer Winkelbedingung und wenigstens einer einer Vielzahl von Optionen in Bezug auf den Zielrahmen, wobei die Winkelbedingung einen Winkel zwischen einer Referenzrichtung des Zielrahmens und einer Richtung betrifft, die von einer Referenzposition des Zielrahmens zu einer Position des mobilen Objekts (56) verläuft;
Positionserzielungsmittel (74) zum Erzielen der Position des mobilen Objekts (56), wenn eine Bedienung durchgeführt wird, um das mobile Objekt (56) in Richtung des Ziels zu bewegen;
Auswahlmittel (76) zum Auswählen wenigstens einer der Vielzahl von Optionen, wenn eine Bedienung durchgeführt wird, um das mobile Objekt (56) in Richtung des Ziels zu bewegen;
Wahrscheinlichkeitsinformationserzielungsmittel (78) zum Erzielen von Wahrscheinlichkeitsinformationen, die in dem Wahrscheinlichkeitsinformationsspeichermittel gespeichert sind entsprechend der Kombination der Winkelbedingung, die von der Position des mobilen Objekts (56), die von dem Positionserzielungsmittel erzielt wird, und der Option, die von dem Auswahlmittel ausgewählt wird, erfüllt wird;
Ereignisauftrittssteuerungsmittel (80) zum Bestimmen, ob das gegebene Ereignis geschehen lassen werden soll, basierend auf den Wahrscheinlichkeitsinformationen, die von dem Wahrscheinlichkeitsinformationserzielungsmittel (78) erzielt werden, und
Anzeigemittel (18) zum Anzeigen eines Spielbildschirms, der ein Auftreten des gegebenen Ereignisses auf der Basis einer Entscheidung zeigt, die von dem Ereignisauftrittssteuerungsmittel (80) getroffen wird,
wobei der Bereich von einzelnen Zielabschnitten (A, B, C, D, E, F) entsprechend der Abweichung der Richtung geändert wird, die von der Referenzposition des Tors zu der Schießposition aus der Referenzrichtung des Tors verläuft.

2. Spielautomat (11) nach Anspruch 1, der ferner umfasst:
Zielrahmenbildspeichermittel zum Speichern eines Zielrahmenbilds entsprechend der Winkelbedingung, wobei das Zielrahmenbild den Zielrahmen darstellt,
wobei
das Auswahlmittel (76) das Zielrahmenbild, das in dem Zielrahmenbildspeichermittel gespeichert ist, entsprechend der Winkelbedingung, die von der mobilen Objektposition erfüllt ist, welche von dem Positionserzielungsmittel (74) erzielt wird, anzeigt.

3. Spielautomat (11) nach Anspruch 2, wobei
das Auswahlmittel (76) Bilder anzeigt, welche jeweils die Vielzahl von Optionen in Verbindung mit einem Teil des Ziels darstellen, der durch den Zielrahmen abgegrenzt ist, welcher durch das Zielrahmenbild dargestellt ist.

4. Spielautomat (11) nach einem der Ansprüche 1 bis 3, wobei:
das Spiel ein Ballsportsimulationsspiel ist, in dem um Punkte wettgeeifert wird, die durch Bringen eines Balls in das Tor vergeben werden, wobei der Ball und das Tor jeweils als das mobile Objekt (56) und der Zielrahmen dienen, wobei das gegebene Ereignis ein Punktvergabeereignis ist; und
eine Bedienung zum Bewegen des mobilen Objekts (56) in Richtung des Ziels eine Bedienung ist, um ein Bediensubjekt dazu zu veranlassen, den Ball zu schießen.

5. Spielautomat (11) nach Anspruch 4, wobei
das Ereignisauftrittssteuermittel (80) umfasst:
erste Entscheidungsmittel um, wenn eine Bedienung durchgeführt wird, um das Bediensubjekt zum Schießen zu veranlassen, basierend auf den Wahrscheinlichkeitsinformationen, die von dem Wahrscheinlichkeitsinformationserzielungsmittel (78) erzielt werden, zu bestimmen, ob der sich ergebende Schuss in das Tor gehen wird oder nicht; und
- zweite Entscheidungsmittel um, wenn eine Bedienung durchgeführt wird, um das Bediensubjekt zum Schießen zu veranlassen, basierend auf den Wahrscheinlichkeitsinformationen, die von dem Wahrscheinlichkeitsinformationserzielungsmittel (78) erzielt werden, zu bestimmen, ob der sich ergebende Schuss von dem Torhüter abgeblockt werden wird oder nicht; und
- das Ereignisauftrittssteuerungsmittel (80) das Punktvergabeereignis basierend auf den von den ersten und zweiten Entscheidungsmitteln getroffenen Entscheidungen eintreten lässt.

6. Verfahren zum Steuern eines Spielautomaten (11), der ein Wettkampfspiel zum Wahrmachen eines gegebenen Ereignisses durch Bewegen eines mobilen Objekts (56) in Richtung eines Ziels, das mit einem Zielrahmen abgegrenzt ist, bereitstellt, wobei das Spiel ein Sportsimulationsspiel ist, das einen Wettkampf simuliert, in dem Punkte erzielt werden, indem das mobile Objekt (56) in ein Tor gebracht wird, welches ein Bereich ist, der durch einen Zielrahmen abgegrenzt ist, innerhalb dem eine Vielzahl von Zielabschnitten (A, B, C, D, E, F) festgelegt ist, und wobei eine Vielzahl von Feldabschnitten (1, 2, 3, 4, 5) in dem Spielfeld basierend auf einem Winkel zwischen einer Referenzrichtung des Ziels und einer Richtung, die von einer Referenzposition des Ziels zu einem Punkt in dem Spielfeld verläuft, festgelegt ist,
wobei das Verfahren umfasst:
einen Positionserzielungsschritt zum Erzielen einer Position des bewegbaren Objekts, wenn eine Bedienung durchgeführt wird, um das mobile Objekt (56) in Richtung des Ziels zu bewegen;
einen Auswahlschritt zum Auswählen wenigstens einer der Vielzahl von Optionen, wenn eine Bedienung durchgeführt wird, um das mobile Objekt (56) in Richtung des Ziels zu bewegen;
einen Wahrscheinlichkeitsinformationserzielungsschritt zum Lesen gespeicherter Informationen aus dem Wahrscheinlichkeitsinformationsspeichermittel, das Wahrscheinlichkeitsinformationen entsprechend einer Kombination einer Winkelbedingung speichert, die einen Winkel zwischen einer Referenzrichtung des Zielrahmens und einer Richtung, die von einer Referenzposition des Zielrahmens zu einer Position des mobilen Objekts (56) verläuft, und wenigstens eine einer Vielzahl von Optionen in Bezug auf den Zielrahmen betrifft, und zum Erzielen von Wahrscheinlichkeitsinformationen, die in dem Wahrscheinlichkeitsinformationsspeichermittel entsprechend der Kombination der Winkelbedingung gespeichert sind, welche von der mobilen Objektposition, die in dem Positionserzielungsschritt erzielt wird, und der Option, die in dem Auswahlschritt ausgewählt wird, erfüllt wird;
einen Ereignisauftrittssteuerungsschritt zum Bestimmen, ob das gegebene Ereignis geschehen lassen werden soll, basierend auf den Wahrscheinlichkeitsinformationen, die in dem Wahrscheinlichkeitsinformationserzielungsschritt erzielt werden,
einen Schritt zum Veranlassen eines Anzeigemittels (18) zum Anzeigen eines Spielbildschirms, der ein Auftreten des gegebenen Ereignisses auf der Basis einer Entscheidung zeigt, die von dem Ereignisauftrittskontrollschritt getroffen wird,
und
einen Schritt zum Ändern des Bereichs von einzelnen Zielabschnitten (A, B, C, D, E, F) entsprechend der Abweichung der Richtung, die von der Referenzposition des Tors zu der Schießposition aus der Referenzrichtung des Tors geändert wird.

7. Informationsspeichermedium (102), das ein Programm speichert, um einen Computer zu veranlassen, als ein Spielautomat (11) zu funktionieren, der ein Wettkampfspiel bereitstellt zum Wahrmachen eines gegebenen Ereignisses durch Bewegen eines mobilen Objekts (56) in Richtung eines Ziels, das mit einem Zielrahmen abgegrenzt ist, wobei das Spiel ein Sportsimulationsspiel ist, das einen Wettkampf simuliert, in dem Punkte erzielt werden, indem das mobile Objekt (56) in ein Tor gebracht wird, welches ein Bereich ist, der durch einen Zielrahmen abgegrenzt ist, innerhalb dem eine Vielzahl von Zielabschnitten (A, B, C, D, E, F) festgelegt ist, und wobei eine Vielzahl von Feldabschnitten (1, 2, 3, 4, 5) in dem Spielfeld basierend auf einem Winkel zwischen einer Referenzrichtung des Ziels und einer Richtung, die von einer Referenzposition des Ziels zu einem Punkt in dem Spielfeld verläuft, festgelegt ist,
wobei das Programm den Computer veranlasst, zu funktionieren als:
Wahrscheinlichkeitsinformationsspeichermittel (70) zum Speichern von Wahrscheinlichkeitsinformationen entsprechend einer Kombination einer Winkelbedingung und wenigstens einer einer Vielzahl von Optionen in Bezug auf den Zielrahmen, wobei die Winkelbedingung einen Winkel zwischen einer Referenzrichtung des Zielrahmens und einer Richtung betrifft, die von einer Referenzposition des Zielrahmens zu einer Position des mobilen Objekts (56) verläuft;
Positionserzielungsmittel (74) zum Erzielen der Position des bewegbaren Objekts, wenn eine Bedienung durchgeführt wird, um das mobile Objekt (56) in Richtung des Ziels zu bewegen;
Auswahlmittel (76) zum Auswählen wenigstens einer der Vielzahl von Optionen, wenn eine Bedienung durchgeführt wird, um das mobile Objekt (56) in Richtung des Ziels zu bewegen;
Wahrscheinlichkeitsinformationserzielungsmittel (78) zum Erzielen von Wahrscheinlichkeitsinformationen, die in dem Wahrscheinlichkeitsinformationsspeichermittel gespeichert sind, entsprechend der Kombination der Winkelbedingung, die von der Position des mobilen Objekts, die von dem Positionserzielungsmittel erzielt wird, und der Option, die von dem Auswahlmittel ausgewählt wird, erfüllt wird;
Ereignisauftrittssteuerungsmittel (80) zum Bestimmen, ob das gegebene Ereignis geschehen lassen werden soll, basierend auf den Wahrscheinlichkeitsinformationen, die von dem Wahrscheinlichkeitsinformationserzielungsmittel erzielt werden, und
Anzeigemittel (18) zum Anzeigen eines Spielbildschirms, der ein Auftreten des gegebenen Ereignisses auf der Basis einer Entscheidung zeigt, die von dem Ereignisauftrittssteuerungsmittel (80) getroffen wird,
wobei der Bereich von einzelnen Zielabschnitten (A, B, C, D, E, F) entsprechend der Abweichung der Richtung geändert wird, die von der Referenzposition des Tors zu der Schießposition aus der Referenzrichtung des Tors geändert wird.

8. Computerprogrammprodukt, um einen Computer zu veranlassen, als ein Spielautomat (11) zu funktionieren, der ein Wettkampfspiel bereitstellt zum Wahrmachen eines gegebenen Ereignisses durch Bewegen eines mobilen Objekts (56) in Richtung eines Ziels, das mit einem Zielrahmen abgegrenzt ist, wobei das Spiel ein Sportsimulationsspiel ist, das einen Wettkampf simuliert, in dem Punkte erzielt werden, indem das mobile Objekt (56) in ein Tor gebracht wird, welches ein Bereich ist, der durch einen Zielrahmen abgegrenzt ist, innerhalb dem eine Vielzahl von Zielabschnitten (A, B, C, D, E, F) festgelegt ist, und wobei eine Vielzahl von Feldabschnitten (1, 2, 3, 4, 5) in dem Spielfeld basierend auf einem Winkel zwischen einer Referenzrichtung des Ziels und einer Richtung, die von einer Referenzposition des Ziels zu einem Punkt in dem Spielfeld verläuft, festgelegt ist,
wobei das Computerprogrammprodukt den Computer veranlasst, zu funktionieren als:
Wahrscheinlichkeitsinformationsspeichermittel (70) zum Speichern von Wahrscheinlichkeitsinformationen entsprechend einer Kombination einer Winkelbedingung und wenigstens einer einer Vielzahl von Optionen in Bezug auf den Zielrahmen, wobei die Winkelbedingung einen Winkel zwischen einer Referenzrichtung des Zielrahmens und einer Richtung betrifft, die von einer Referenzposition des Zielrahmens zu einer Position des mobilen Objekts (56) verläuft;
Positionserzielungsmittel (74) zum Erzielen der Position des bewegbaren Objekts, wenn eine Bedienung durchgeführt wird, um das mobile Objekt (56) in Richtung des Ziels zu bewegen;
Auswahlmittel (76) zum Auswählen wenigstens einer der Vielzahl von Optionen, wenn eine Bedienung durchgeführt wird, um das mobile Objekt (56) in Richtung des Ziels zu bewegen;
Wahrscheinlichkeitsinformationserzielungsmittel (78) zum Erzielen von Wahrscheinlichkeitsinformationen, die in dem Wahrscheinlichkeitsinformationsspeichermittel (70) gespeichert sind, entsprechend der Kombination der Winkelbedingung, die von der Position des mobilen Objekts, die von dem Positionserzielungsmittel erzielt wird, und der Option, die von dem Auswahlmittel ausgewählt wird, erfüllt wird;
Ereignisauftrittssteuerungsmittel (80) zum Bestimmen, ob das gegebene Ereignis geschehen lassen werden soll, basierend auf den Wahrscheinlichkeitsinformationen, die von dem Wahrscheinlichkeitsinformationserzielungsmittel (78) erzielt werden, und
Anzeigemittel (18) zum Anzeigen eines Spielbildschirms, der ein Auftreten des gegebenen Ereignisses auf der Basis einer Entscheidung zeigt, die von dem Ereignisauftrittssteuerungsmittel getroffen wird, wobei der Bereich von einzelnen Zielabschnitten (A, B, C, D, E, F) entsprechend der Abweichung der Richtung geändert wird, die von der Referenzposition des Tors zu der Schießposition aus der Referenzrichtung des Tors verläuft.

## Revendications

1. Machine de jeu (11) pour fournir un jeu de compétition pour l'élaboration d'un événement donné qui se produit par le déplacement d'un objet mobile (56) vers une cible qui est délimitée par un cadre de cible, dans laquelle le jeu est un jeu de simulation d'un sport qui simule un match dans lequel des points sont marqués en plaçant l'objet mobile (56) dans un but qui est une zone délimitée par un cadre de cible à l'intérieur duquel une pluralité de secteurs cibles (A, B, C, D, E, F) sont implantés et dans lequel une pluralité de zones de champ (1, 2, 3, 4, 5) sont ajustées dans le champ de jeu sur la base d'un angle entre une direction de référence du but et une direction qui s'étend depuis une position de référence du but vers un point dans le champ de jeu, la machine de jeu (11) comprenant :
un moyen de mémorisation des informations de probabilité (70) pour mémoriser une information de probabilité en correspondance avec une combinaison d'une condition d'angle et d'au moins une option parmi une pluralité d'options associées au cadre de cible, la condition d'angle étant environ un angle entre une direction de référence du cadre de cible et une direction qui s'étend depuis une position de référence du cadre de cible vers une position de l'objet mobile (56) ;
un moyen d'obtention de position (74) pour obtenir la position de l'objet mobile (56) lorsqu'une opération est accomplie afin de déplacer l'objet mobile (56) vers la cible ;
un moyen de sélection (76) pour sélectionner au moins une option parmi la pluralité d'options lorsqu'une opération est accomplie afin de déplacer l'objet mobile (56) vers la cible ;
un moyen d'obtention des informations de probabilité (78) pour obtenir une information de probabilité qui est mémorisée dans le moyen de mémorisation des informations de probabilité en correspondance avec la combinaison de la condition d'angle qui est remplie par la position de l'objet mobile (56) obtenue par le moyen d'obtention de position et de l'option qui est sélectionnée par le moyen de sélection ;
un moyen de contrôle de surgissement d'événement (80) pour déterminer si l'événement donné qui se produit est permis sur la base de l'information de probabilité qui est obtenue par le moyen d'obtention des informations de probabilité (78) ; et
un moyen d'affichage (18) pour afficher un écran de jeu qui montre un surgissement de l'événement donné sur la base d'une décision effectuée par le moyen de contrôle de surgissement d'événement (80),
dans laquelle la surface des secteurs cibles isolés (A, B, C, D, E, F) est variée conformément à la déviation de la direction qui s'étend depuis la position de référence du but vers la position de tir à partir de la direction de référence du but.

2. Machine de jeu (11) conformément à la revendication 1, comprenant en outre :
un moyen de mémorisation d'image du cadre de cible pour mémoriser une image du cadre de cible en correspondance avec la condition d'angle, l'image du cadre de cible représentant le cadre de cible,
dans laquelle
le moyen de sélection (76) affiche l'image du cadre de cible qui est mémorisée dans le moyen de mémorisation d'image du cadre de cible en correspondance avec la condition d'angle qui est remplie par la position de l'objet mobile obtenue par le moyen d'obtention de position (74).

3. Machine de jeu (11) conformément à la revendication 2, dans laquelle :
le moyen de sélection (76) affiche des images qui représentent respectivement la pluralité d'options en association avec une partie de la cible qui est délimitée par le cadre de cible représenté par l'image du cadre de cible.

4. Machine de jeu (11) conformément à l'une quelconque des revendications 1 à 3, dans laquelle :
le jeu est un jeu de simulation de sport de ballon consistant à se disputer des points marqués en plaçant un ballon dans le but, opération pendant laquelle le ballon et le but servent respectivement d'objet mobile (56) et de cadre de cible et pendant laquelle l'événement donné est un événement de marquage de points ; et
une opération consistant à déplace l'objet mobile (56) vers la cible est une opération consistant à provoquer qu'un sujet d'action lance le ballon.

5. Machine de jeu (11) conformément à la revendication 4, dans laquelle :
le moyen de contrôle de surgissement d'événement (80) inclut :
un premier moyen de décision pour déterminer si, lorsqu'une opération est accomplie pour provoquer que le sujet d'action tire, le tir qui en résulte arrive ou non dans le but sur la base de l'information de probabilité qui est obtenue par le moyen d'obtention des informations de probabilité (78) ; et
un second moyen de décision pour déterminer si, lorsqu'une opération est accomplie pour provoquer que le sujet d'action tire, le tir qui en résulte est bloqué ou non par un gardien de but sur la base de l'information de probabilité qui est obtenue par le moyen d'obtention des informations de probabilité (78) ; et
le moyen de contrôle de surgissement d'événement (80) permet l'événement de marquage de points qui se produit sur la base de décisions faites par le premier et par le second moyen de décision.

6. Procédé pour contrôler une machine de jeu (11) qui fournit un jeu de compétition pour l'élaboration d'un événement donné qui se produit par le déplacement d'un objet mobile (56) vers une cible qui est délimitée par un cadre de cible, dans lequel le jeu est un jeu de simulation d'un sport qui simule un match dans lequel des points sont marqués en plaçant l'objet mobile (56) dans un but qui est une zone délimitée par un cadre de cible à l'intérieur duquel une pluralité de secteurs cibles (A, B, C, D, E, F) sont implantés et dans lequel une pluralité de zones de champ (1, 2, 3, 4, 5) sont ajustées dans le champ de jeu sur la base d'un angle entre une direction de référence du but et une direction qui s'étend depuis une position de référence du but vers un point dans le champ de jeu,
le procédé comprenant :
une étape d'obtention de position consistant à obtenir une position de l'objet mobile lorsqu'une opération est accomplie afin de déplacer l'objet mobile (56) vers la cible ;
une étape de sélection consistant à sélectionner au moins une option parmi la pluralité d'options lorsqu'une opération est accomplie afin de déplacer l'objet mobile (56) vers la cible ;
une étape d'obtention des informations de probabilité consistant à lire une information mémorisée depuis le moyen de mémorisation des informations de probabilité qui mémorise l'information de probabilité en correspondance avec une combinaison d'une condition d'angle qui est environ un angle entre une direction de référence du cadre de cible et une direction qui s'étend depuis une position de référence du cadre de cible vers la position de l'objet mobile (56), et d'au moins une option parmi une pluralité d'options associées au cadre de cible, et consistant à obtenir l'information de probabilité qui est mémorisée dans le moyen de mémorisation des informations de probabilité en correspondance avec la combinaison de la condition d'angle qui est remplie par la position de l'objet mobile obtenue dans l'étape d'obtention de position et l'option qui est sélectionnée dans l'étape de sélection ;
une étape de contrôle de surgissement d'événement consistant à déterminer si l'événement donné qui se produit est permis sur la base de l'information de probabilité qui est obtenue dans l'étape d'obtention des informations de probabilité ;
une étape consistant à provoquer que le moyen d'affichage (18) affiche un écran de jeu qui montre un surgissement de l'événement donné sur la base d'une décision effectuée dans l'étape de contrôle de surgissement d'événement,
et
une étape consistant à varier la surface des secteurs cibles isolés (A, B, C, D, E, F) conformément à la déviation de la direction qui s'étend depuis la position de référence du but vers la position de tir à partir de la direction de référence du but.

7. Support de mémorisation d'informations (102) qui mémorise un programme pour provoquer qu'un ordinateur fonctionne comme une machine de jeu (11) qui fournit un jeu de compétition pour l'élaboration d'un événement donné qui se produit par le déplacement d'un objet mobile (56) vers une cible qui est délimitée par un cadre de cible, dans lequel le jeu est un jeu de simulation d'un sport qui simule un match dans lequel des points sont marqués en plaçant l'objet mobile (56) dans un but qui est une zone délimitée par un cadre de cible à l'intérieur duquel une pluralité de secteurs cibles (A, B, C, D, E, F) sont implantés et dans lequel une pluralité de zones de champ (1, 2, 3, 4, 5) sont ajustées dans le champ de jeu sur la base d'un angle entre une direction de référence du but et une direction qui s'étend depuis une position de référence du but vers un point dans le champ de jeu,
dans lequel le programme provoque que l'ordinateur fonctionne comme :
moyen de mémorisation des informations de probabilité (70) pour mémoriser une information de probabilité en correspondance avec une combinaison d'une condition d'angle et d'au moins une option parmi une pluralité d'options associées au cadre de cible, la condition d'angle étant environ un angle entre une direction de référence du cadre de cible et une direction qui s'étend depuis une position de référence du cadre de cible vers une position de l'objet mobile (56) ;
moyen d'obtention de position (74) pour obtenir la position de l'objet mobile lorsqu'une opération est accomplie afin de déplacer l'objet mobile (56) vers la cible ;
moyen de sélection (76) pour sélectionner au moins une option parmi la pluralité d'options lorsqu'une opération est accomplie afin de déplacer l'objet mobile (56) vers la cible ;
moyen d'obtention des informations de probabilité (78) pour obtenir une information de probabilité qui est mémorisée dans le moyen de mémorisation des informations de probabilité en correspondance avec la combinaison de la condition d'angle qui est remplie par la position de l'objet mobile obtenue par le moyen d'obtention de position et de l'option qui est sélectionnée par le moyen de sélection ;
moyen de contrôle de surgissement d'événement (80) pour déterminer si l'événement donné qui se produit est permis sur la base de l'information de probabilité qui est obtenue par le moyen d'obtention des informations de probabilité ; et
moyen d'affichage (18) pour afficher un écran de jeu qui montre un surgissement de l'événement donné sur la base d'une décision effectuée par le moyen de contrôle de surgissement d'événement (80),
dans lequel la surface des secteurs cibles isolés (A, B, C, D, E, F) est variée conformément à la déviation de la direction qui s'étend depuis la position de référence du but vers la position de tir à partir de la direction de référence du but.

8. Produit de programme d'ordinateur pour provoquer qu'un ordinateur fonctionne comme une machine de jeu (11) qui fournit un jeu de compétition pour l'élaboration d'un événement donné qui se produit par le déplacement d'un objet mobile (56) vers une cible qui est délimitée par un cadre de cible, dans lequel le jeu est un jeu de simulation d'un sport qui simule un match dans lequel des points sont marqués en plaçant l'objet mobile (56) dans un but qui est une zone délimitée par un cadre de cible à l'intérieur duquel une pluralité de secteurs cibles (A, B, C, D, E, F) sont implantés et dans lequel une pluralité de zones de champ (1, 2, 3, 4, 5) sont ajustées dans le champ de jeu sur la base d'un angle entre une direction de référence du but et une direction qui s'étend depuis une position de référence du but vers un point dans le champ de jeu,
dans lequel le produit de programme d'ordinateur provoque que l'ordinateur fonctionne comme :
moyen de mémorisation des informations de probabilité (70) pour mémoriser une information de probabilité en correspondance avec une combinaison d'une condition d'angle et d'au moins une option parmi une pluralité d'options associées au cadre de cible, la condition d'angle étant environ un angle entre une direction de référence du cadre de cible et une direction qui s'étend depuis une position de référence du cadre de cible vers une position de l'objet mobile (56) ;
moyen d'obtention de position (74) pour obtenir la position de l'objet mobile lorsqu'une opération est accomplie afin de déplacer l'objet mobile (56) vers la cible ;
moyen de sélection (76) pour sélectionner au moins une option parmi la pluralité d'options lorsqu'une opération est accomplie afin de déplacer l'objet mobile (56) vers la cible ;
moyen d'obtention des informations de probabilité (78) pour obtenir une information de probabilité qui est mémorisée dans le moyen de mémorisation des informations de probabilité (70) en correspondance avec la combinaison de la condition d'angle qui est remplie par la position de l'objet mobile obtenue par le moyen d'obtention de position et de l'option qui est sélectionnée par le moyen de sélection (76) ;
moyen de contrôle de surgissement d'événement (80) pour déterminer si l'événement donné qui se produit est permis sur la base de l'information de probabilité qui est obtenue par le moyen d'obtention des informations de probabilité (78) ; et
moyen d'affichage (18) pour afficher un écran de jeu qui montre un surgissement de l'événement donné sur la base d'une décision effectuée par le moyen de contrôle de surgissement d'événement,
dans lequel la surface des secteurs cibles isolés (A, B, C, D, E, F) est variée conformément à la déviation de la direction qui s'étend depuis la position de référence du but vers la position de tir à partir de la direction de référence du but.
